Europäisches Patentamt

(19) European Patent Office          (11) Publication number: **0 003 636**

Office européen des brevets                                              **A2**

(12)                **EUROPEAN PATENT APPLICATION**

(21) Application number: 79300037.3          (51) Int. Cl.²: **F 16 G 11/02**

(22) Date of filing: **10.01.79**

(30) Priority: **11.01.78 GB 100678**          (71) Applicant: **CCL SYSTEMS LIMITED, Cabco House Ewell Road, Surbiton Surrey KT6 7AH (GB)**

(43) Date of publication of application: **22.08.79 Bulletin 79/17**          (72) Inventor: **Edwards, Hugh Jeremy Willis, 'Braeside' 19 Newfield Drive Menston, Ilkley West Yorkshire (GB)**

(84) Designated Contracting States: **BE CH DE FR GB IT LU NL SE**          (74) Representative: **Shaw, Laurence, Group Patents Department Foseco International Limited 285 Long Acre Nechells, Birmingham B7 5JR (GB)**

(54) An assembly for compression onto a strand cable or a wire rope and method of compressing such an assembly.

㊼ An assembly for compression on to a strand cable or a wire rope comprises a sleeve (1) and a tubular insert (2) to be interposed between the sleeve and the cable or rope. The insert (2) comprises a plurality of inter-linked insert portions (6) which are formed by helically coiling a rolled steel strip. Teeth (4) and side shoulders (5) are formed on the strip during rolling, the teeth being arranged to bite into the cable or rope and the shoulders being arranged to receive sleeve material when the sleeve is compressed. The invention includes a method of compressing the assembly on to the cable or rope such that the insert portions (6) tend to move apart, and also includes the insert itself as an item of commerce.

0003636

TITLE MODIFIED
see front page

CCL Systems Limited           - 1 -                    L 101 EU

AN ASSEMBLY FOR COMPRESSION ON
TO A STRAND CABLE OR A WIRE ROPE

The invention relates to an assembly for compression on to a strand cable or a wire rope to join two such cables or ropes together or to terminate an end of one cable or rope.

In marine and civil engineering, it is often necessary to join a metal sleeve on to a strand cable or a wire rope, for example to join two such cables or ropes in end-to-end relation within the sleeve, or to form a loop in a wire rope. It is known from British Patent No. 890 740 to use an assembly of a sleeve and a tubular insert for such purposes, the insert being interposed between the sleeve and the cable or rope, the insert being formed of a hard metal and adapted to bite into or grip the sleeve and having teeth to bite into the cable or rope when the sleeve is compressed. Whilst this assembly has proved to be extremely effective, on occasion it has been found that when the sleeve is longer than the bite of a press used to compress the sleeve on to the insert in a number of steps along the sleeve, stresses may be set up in the insert which sometimes endangers the strength of the joint. In addition, the insert is machined from one piece of material which is an expensive process. These problems have restricted the uses to which the assembly can be put. It is an object of the invention to provide an improved form of assembly, with an insert which is more suitable for use with long sleeves and which is cheaper and simpler to make.

The assembly is also suitable for use with concrete-reinforcing bars when the bars are used in place of the cable or rope.

According to the invention there is provided an assembly for compression on to a strand cable or a wire rope, the assembly comprising a sleeve and a tubular insert to be interposed between the sleeve and the cable or rope, the insert being harder than both the sleeve and the cable or rope, opposite surfaces of the insert being adapted to engage respectively the sleeve and cable or rope when the assembly is compressed on to the cable or rope, in which the insert comprises a plurality of inter-linked insert portions.

When such an assembly is compressed on to the cable or rope, especially in a series of bites along the length of the sleeve, the insert portions tend to move apart so absorbing compression forces and relieving any stresses which may otherwise tend to concentrate and so weaken the strength of the joint.

While the surfaces of the insert may be adapted in any way to engage respectively the sleeve and the cable or rope, it is much preferred that the inner surface of the insert be provided with longitudinally spaced apart and generally sharp teeth portions. Such teeth are able to engage the cable or rope in a strong manner. The surface of the insert to engage the sleeve may be knurled or the like but it is much preferred that the surface be smooth for ease of insertion of the insert into the sleeve, and that each insert portion have side shoulders to accept between adjacent portions material of the sleeve during compression to key that material between adjacent insert portions.

Preferably the insert is formed of a strip of material. In a much preferred embodiment the strip is helically coiled with the turns of the coil arranged in side-by-side relation, which reduces the tendency of the turns to be moved apart by sleeve material flowing between adjacent insert portions during compression. It is, however, not essential that the strip be helically coiled and other ways falling within the scope of the invention, of forming the strip into a plurality of insert portions are envisaged.

It is a much preferred feature of the invention that the insert be formed by rolling a narrow strip of suitable material about a mandrel to form a coil. In this way inserts of different diameter may readily be formed simply by changing the diameter of the mandrel, and the coil may be cut to the required insert lengths. In the case of the preferred embodiment where the insert inner surface has teeth and the outer surface has shoulders on each insert portion, it is much preferred to pass the strip through a rolling mill shaped to form these adaptations on opposite surfaces of the strip, and then to coil that strip as described.

It is necessary that the insert be relatively harder than the sleeve and the cable or rope, but such hardness can be confined to the skin portion of the insert. For example the insert may be formed of mild steel and the insert may then be case hardened for example by a cyanide treatment, to harden the skin portion.

The invention includes a method of compression splicing using the assembly here disclosed, and also, as a new item of commerce, an insert comprising a coiled strip of material the turns of which are arranged in side-by-side relation and having on the inner surface of the coil portions parallel teeth, and preferably having on the outer surface of each portion, side shoulders.

One way of carrying out the invention is described in detail below with reference to the drawings which represent only one specific embodiment, in which

Figure 1 is a perspective view of an assembly of a sleeve and an insert according to the invention, before compression,

Figure 2 is a longitudinal section of the assembly, and

Figures 3 and 4 are longitudinal sections of the assembly at a stage of being compressed on to the cable and when compressed respectively.

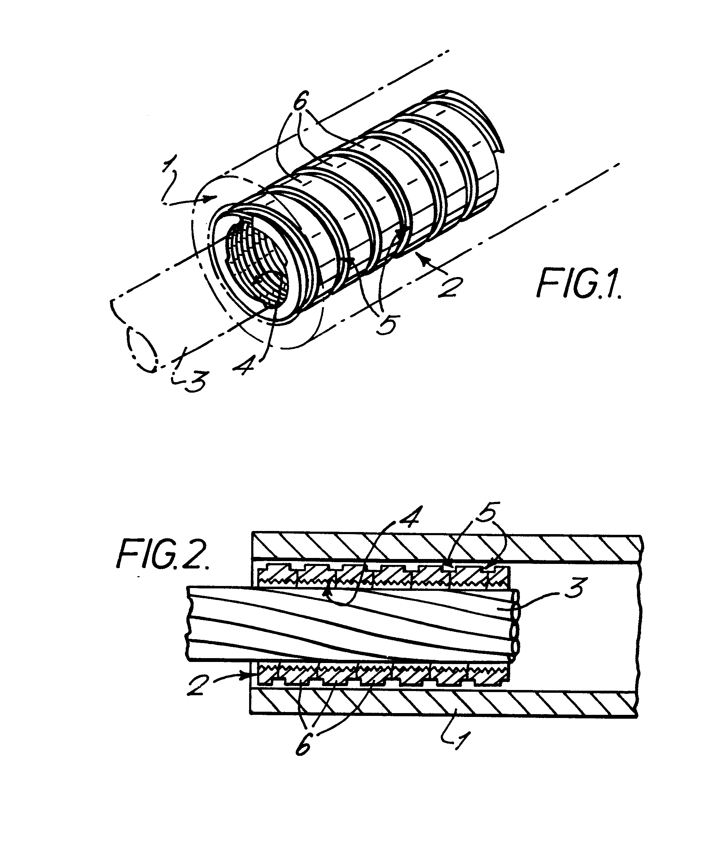

Referring to Figures 1 and 2, a metal sleeve 1 receives a loose fitting insert 2 and an end portion of a steel strand cable 3. The cable 3 is harder than the sleeve 1, and the insert 2 is harder than both the sleeve and the cable. For example, the cable may have a tensile strength of about 120 tons and a hardness of 53 to 55 Rockwell C, the insert may have a hardness of 60 to 65 Rockwell C and the sleeve may have a hardness of less than 4 Rockwell C, 70 to 85 Rockwell B.

The insert 2 was formed by passing mild steel in strip form through a rolling mill to form on one face longitudinally extending teeth, and shoulders on the opposite face. The strip was then helically wound on a mandrel, not shown, with the teeth facing the mandrel, to form an insert 2 having turns 6 arranged in side-by-side abutting relation with the teeth 4 on the inner face and the shoulders 5 on the outer face of each turn. The coil was then cut into lengths which were then case-hardened by cyanide treatment to harden the skin of the insert to be harder than the sleeve and the cable with which they were to be used.

In use, the insert 2 is loosely located in the sleeve 1 and both are slipped over the end of the cable 3. The sleeve is then compressed by a compression press in a series of steps along the sleeve using any suitable equipment, the press and dies described in British Patent No. 1 526 221 being especially suitable for this purpose.

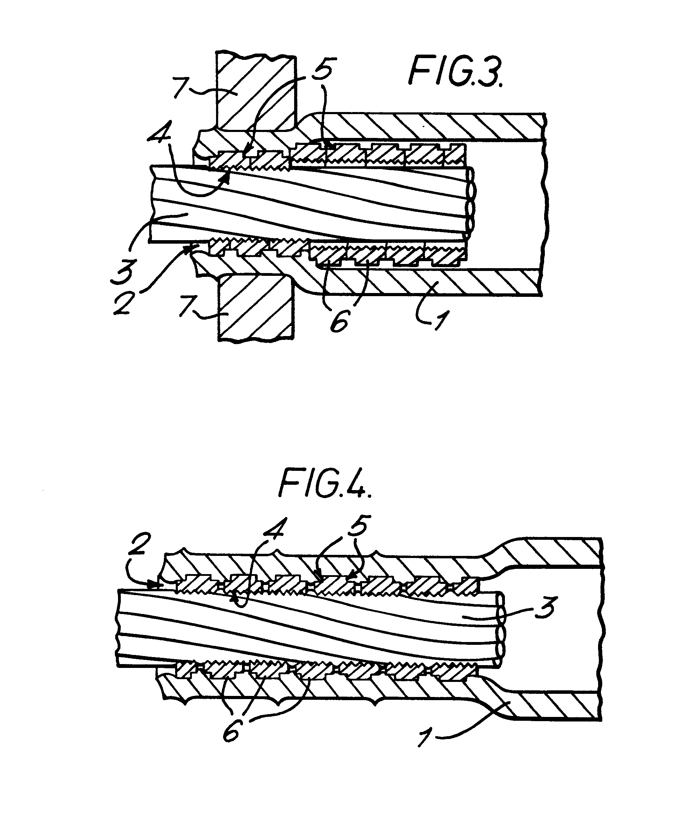

At the first compression step, as shown diagrammatically in Figure 3, the dies 7 of the press compress a portion of the sleeve 1 onto the underlying turns 6 and cause the teeth 4 to bite into the cable 3 so keying the insert to the cable. As the sleeve is squeezed between the insert and the dies, some of the metal of the sleeve is caused to flow into the groove defined between the shoulders 5 of adjacent turns so keying the sleeve to the insert. At the same time, the sleeve metal being squeezed into the groove tends to urge the turns 6 of the insert apart, but this tendency is reduced by the helical winding of the coil, and in this way a tight and secure joint is formed.

Similar compression steps are applied as necessary along a length of the sleeve until the joint has been completed and reached the condition shown in Figure 4. The sleeve may then be compressed in the same way about a second insert located in the uncompressed portion of the sleeve to form a splice of two cables.

Evaluations showed that the splice had a highly satisfactory strength despite the facts that the sleeve elongated by about 12% during the compression and that the compression took place in a series of steps along the length of the sleeve.

The compression assembly of the invention may be used in a variety of applications in marine and civil engineering, including anchorage couplings for post-tensioning, individual joints for unbonded tendons, flat slab tendons and circular tendons, and on-site make up of ground anchorage tendons. They may also be used to join concrete-reinforcing bars, particularly plain round concrete-reinforcing bars.

CCL Systems Limited                 - 1 -                    L 101 EU

Claims:

1. An assembly for compression on to a strand cable or a wire
rope, the assembly comprising a sleeve and a tubular insert to
be interposed between the sleeve and the cable or rope, the
insert being harder than both the sleeve and the cable or rope,
opposite surfaces of the insert being adapted to engage respectively the sleeve and cable or rope when the assembly is compressed
on to the cable or rope,
        characterised in that the insert (2) comprises a plurality
of inter-linked insert portions (6).

2. An assembly according to Claim 1, in which the insert portions
(6) each have side shoulders (5) to accept between adjacent
portions (6) material of the sleeve (1) during compression.

3. An assembly according to Claim 1 or 2, in which the insert is
formed of a strip of material.

4. An assembly according to Claim 3, in which the strip is helically coiled with the turns (6) of the coil arranged in side-by-
side relation.

5. An assembly according to Claim 3 or 4, in which the insert has on the inside teeth (4) and on the outside shoulders (5), the teeth and shoulders being formed on the strip during passage through a rolling mill.

6. An assembly according to any one of Claims 1 to 5, in which the skin portion of the insert is hardened.

7. A method of compressing an assembly of a sleeve (1) and a tubular insert (2) on to a strand cable or a wire rope, the method comprising compressing on to the cable or rope an assembly according to any one of Claims 1 to 6, such that the insert portions (6) tend to move apart.

8. A method according to Claim 7, in which the sleeve (1) is compressed in a plurality of steps along the sleeve.

9. An insert for use in an assembly according to any one of Claims 1 to 6, comprising a coiled strip of material the turns (6) of which are arranged in side-by-side relation and having on the inner surface of the coil portions (6) parallel teeth (4).

10. An insert according to Claim 9, in which the coil portions (6) each have side shoulders (5).

FIG.1.

FIG.2.

FIG.3.

FIG.4.